# EUROPEAN PATENT APPLICATION

(11) **EP 4 834 584 A1**
(43) Date of publication of application: **04.11.2026**
(21) Application number: 24913115.2
(22) Date of filing: 27.12.2024
(51) Int. Cl.: B32B 27/32, B32B 7/035, B32B 7/04

(54) **POLYPROPYLENE MULTILAYER SHEET EXCEPTIONAL IN RECYCLABILITY, AND MOLDED BODY THEREOF**

(30) Priority: 28.12.2023 JP 2023223241
(71) Applicant: SunAllomer Ltd., Tokyo 140-0002 (JP)
(72) Inventor: AKINAGA, Shuji, Kawasaki-shi, Kanagawa 210-0863 (JP); AOYAMA, Ryuji, Kawasaki-shi, Kanagawa 210-0863 (JP)
(74) Representative: Plasseraud IP
(86) International application number: PCT/JP2024/046417
(87) International publication number: WO 2025/143229

(57) **Abstract**

A polypropylene multilayer sheet having a thickness of 0.5 to 5 mm, wherein the polypropylene multilayer sheet includes: a plurality of biaxially stretched polypropylene layers; and one or more layers P composed of a composition containing a polypropylene-based resin and an ethylene-C4 to C10 α-olefin copolymer, and the polypropylene multilayer sheet has the following characteristics: 1) the layer P has a thickness of 0.5 to 500 µm, 2) at least one of the layers P is present at a position satisfying 2% ≤ r/R where r is a distance from an origin to a position of an interface between the layer P and another layer on the origin side in the thickness direction, and R is a total thickness of the multilayer sheet, provided that the origin is a surface of the multilayer sheet, the surface being a surface where r is minimum, and 3) a content of the ethylene-C4 to C10 α-olefin copolymer in the composition constituting the layer P is 10 to 40 wt%.

## Description

### TECHNICAL FIELD

The present invention relates to a polypropylene multilayer sheet having excellent recyclability and a formed article thereof.

### BACKGROUND ART

In order to improve designability, coating or a decorative film is generally applied to plastic. However, when the plastic formed article is recycled, it is necessary to remove the coating film and the film. As a method for peeling off the coating film or the like, a method using an ethylene-butene copolymer for a peeling layer is known (for example, PTL 1). In addition, PTL 2 discloses a polypropylene multilayer sheet including a layer having easy peeling properties.

### CITATION LIST

### PATENT LITERATURE

PTL 1: JP 2007-237590 A
PTL 2: International Publication No. WO 2023/127972

### SUMMARY OF INVENTION

### TECHNICAL PROBLEM

When the peel strength of the peeling layer in the article is excessively low, the coating film or the like peels off during use of the article. On the other hand, when the peel strength of the peeling layer in the article is excessively high, it is difficult to peel off the coating film or the like. In particular, in the automobile exterior field and the like, when the peel strength is excessively low, there is a possibility that the coating is peeled off due to an external stimulus in a natural environment, a high-pressure car wash, or the like, but there is a demand for peeling off the coating film at the time of recycling. In view of such circumstances, an object of the present invention is to provide a product having appropriate peel strength.

### SOLUTION TO PROBLEM

The inventors have found that the above problems can be solved by optimizing the layer configuration of the multilayer sheet. That is, the above problems can be solved by the present invention below.

### Aspect 1

A polypropylene multilayer sheet having a thickness of 0.5 to 5 mm, wherein the polypropylene multilayer sheet includes:
a plurality of biaxially stretched polypropylene layers; and
one or more layers P composed of a composition containing a polypropylene-based resin and an ethylene-C4 to C10 α-olefin copolymer, and
the polypropylene multilayer sheet has the following characteristics:
   1) the layer P has a thickness of 0.5 to 500 µm,
   2) at least one of the layers P is present at a position satisfying 2% ≤ r/R
      where r is a distance from an origin to a position of an interface between the layer P and another layer on the origin side in the thickness direction, and
      R is a total thickness of the multilayer sheet, provided that the origin is a surface of the multilayer sheet, the surface being a surface where r is minimum, and
   3) a content of the ethylene-C4 to C10 α-olefin copolymer in the composition constituting the layer P is 10 to 40 wt%.

### Aspect 2

The polypropylene multilayer sheet according to aspect 1, wherein
the composition constituting the layer P has a melt flow rate (MFR) (230°C, load 2.16 kg) of 0.5 to 30 g/10 min, and
an intrinsic viscosity of a normal temperature xylene soluble component in the composition is 0.5 to 4 dL/g.

### Aspect 3

The polypropylene multilayer sheet according to aspect 2, wherein
the composition constituting the layer P contains a polypropylene-based resin having a phase structure in which a component (A2) is dispersed in a component (A1),
the component (A1) is 60 to 90 wt% of a propylene (co)polymer containing 0 to 5 wt% of a comonomer-derived unit selected from C2 to C10 α-olefins (excluding C3 α-olefins), and
the component (A2) is 10 to 40 wt% of an ethylene-C4 to C10 α-olefin copolymer containing 10 to 35 wt% of a C4 to C10 α-olefin-derived unit.

### Aspect 4

The polypropylene multilayer sheet according to any one of aspects 1 to 3, wherein the layer P is a biaxially stretched layer.

### Aspect 5

The polypropylene multilayer sheet according to any one of aspects 1 to 4, wherein
the polypropylene multilayer sheet is formed by a method including fusing interlayers of a precursor in which a biaxially stretched polypropylene sheet-like part that forms the biaxially stretched polypropylene layer and a sheet-like part that forms the layer P are laminated,
the precursor includes a coextruded layer in which polypropylene layers are respectively laminated on both sides of the layer P,
the layer P is a layer P' containing a polypropylene-based resin having a phase structure in which a component (A2) is dispersed in a component (A1'),
the component (A1') is 60 to 90 wt% of a propylene polymer, and
the component (A2) is 10 to 40 wt% of an ethylene-C4 to C10 α-olefin copolymer containing 10 to 35 wt% of a C4 to C10 α-olefin-derived unit.

### Aspect 6

The polypropylene multilayer sheet according to aspect 5, wherein the coextruded layer is a biaxially stretched layer.

### Aspect 7

The polypropylene multilayer sheet according to any one of aspects 1 to 4, wherein
the polypropylene multilayer sheet is formed by a method including fusing interlayers of a precursor in which a biaxially stretched polypropylene sheet-like part that forms the biaxially stretched polypropylene layer and a sheet-like part that forms the layer P are laminated,
the layer P is a layer P" containing a polypropylene-based resin having a phase structure in which a component (A2) is dispersed in a component (A1"),
the component (A1") is 60 to 90 wt% of a propylene copolymer containing more than 0 and up to 5 wt% of a comonomer-derived unit selected from C2 to C10 α-olefins (excluding C3 α-olefins), and
the component (A2) is 10 to 40 wt% of an ethylene-C4 to C10 α-olefin copolymer containing 10 to 35 wt% of a C4 to C10 α-olefin-derived unit.

### Aspect 8

The polypropylene multilayer sheet according to aspect 7, wherein the precursor includes a coextruded layer in which the layers P" are respectively laminated on both sides of the biaxially stretched polypropylene layer.

### Aspect 9

The polypropylene multilayer sheet according to any one of aspects 1 to 8, wherein the layer P contains 10 wt% or less of an inorganic filler.

### Aspect 10

A formed article obtained by forming the polypropylene multilayer sheet according to any one of aspects 1 to 9.

### Aspect 11

The formed article according to aspect 10, wherein the formed article is an automobile part.

### Aspect 12

A peeling method for peeling at least one layer from the polypropylene multilayer sheet according to any one of aspects 1 to 9 or the formed article according to aspect 10 or 11, wherein the layer P is used as a peeling layer.

### ADVANTAGEOUS EFFECTS OF INVENTION

According to the present invention, a product having appropriate peel strength can be provided.

### BRIEF DESCRIPTION OF DRAWINGS

Fig. 1 illustrates a view for explaining an outline of a polypropylene multilayer sheet.
Fig. 2 illustrates a view for explaining a polypropylene multilayer sheet of a first aspect.
Fig. 3 illustrates a view for explaining an outline of a method for producing the polypropylene multilayer sheet of the first aspect.
Fig. 4 illustrates a view for explaining a polypropylene multilayer sheet of a second aspect.
Fig. 5 illustrates a view for explaining an outline of a method for producing the polypropylene multilayer sheet of the second aspect.

### DESCRIPTION OF EMBODIMENTS

In the present disclosure, "X to Y" includes its end values, that is, X and Y. A sheet and a film are used synonymously, and in particular, a film-like part having a thickness of 150 µm or more may be referred to as a sheet, and a film-like part having a thickness of less than 150 µm may be referred to as a film. In addition, the sheet and the film may be collectively referred to as "sheet-like part".

### 1. Polypropylene multilayer sheet

### (1) Thickness

In one aspect, the thickness of the polypropylene multilayer sheet (hereinafter, also simply referred to as "multilayer sheet") is 0.5 to 5 mm. When the sheet is excessively thin, the peelability is not good, so that recycling becomes difficult. When the sheet is excessively thick, it is difficult to produce the multilayer sheet. From such a viewpoint, the lower limit of the thickness is preferably 0.7 mm or more, and more preferably 1 mm or more. The upper limit of the thickness is preferably 4.5 mm or less, and more preferably 4 mm or less. That is, as a preferable thickness range, 0.7 to 4.5 mm or 1 to 4 mm can be exemplified. The thickness of the multilayer sheet is appropriately adjusted depending on the application.

### (2) Multilayer structure

The multilayer sheet includes a plurality of biaxially stretched polypropylene layers, and one or more layers P composed of a composition containing a polypropylene-based resin and an ethylene-C4 to C10 α-olefin copolymer. The layer P is a non-stretched layer, a uniaxially stretched layer, or a biaxially stretched layer. The biaxially stretched polypropylene layer is composed of a polypropylene-based resin or a composition thereof. The polypropylene-based resin is a resin containing polypropylene as a main component.

### (2-1) Position of layer P

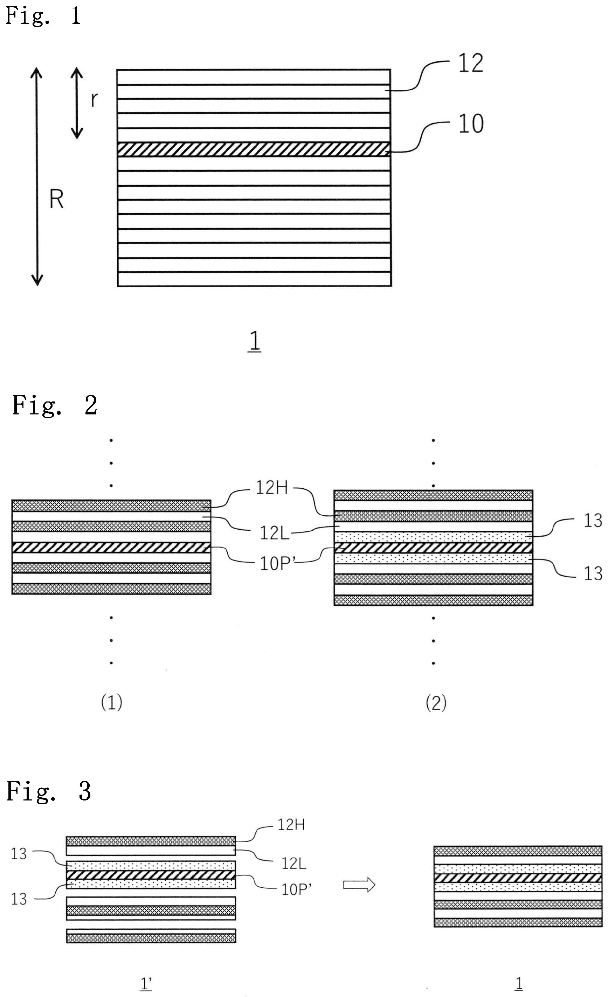

The layer P is present at a specific position and functions as a peeling layer. Therefore, in the multilayer sheet, the layer above the layer P and the layer below the layer P can be divided. Although details of the peeling method will be described later, at least one layer P is present at a position satisfying 2% ≤ r/R. As illustrated in Fig. 1, when the surface of the multilayer sheet is defined as an origin, r is a distance from the origin to a position of an interface between the layer P and another layer on the origin side in the thickness direction. There are two surfaces of the multilayer sheet, and the origin is defined as a surface where r is minimum. R is the total thickness of the multilayer sheet. In the drawing, reference alphanumeric 1 denotes a multilayer sheet, reference alphanumeric 10 denotes a layer P, and reference alphanumeric 12 denotes a biaxially stretched polypropylene layer. When the above relationship is satisfied, appropriate peel strength is achieved. From such a viewpoint, the lower limit of r/R is preferably 5% or more, and more preferably 7% or more. The upper limit of r/R is preferably 40% or less, and more preferably 30% or less. Therefore, as a preferable range of r/R, 5 to 40% or 7 to 30% can be exemplified.

When a plurality of layers P are present, the position of the layer exhibiting peelability with an appropriate peel strength at the time of peeling can be determined by controlling the thickness and the like of each layer. In addition, the position can be determined by providing a starting point in a specific layer as in the peeling test. For example, when a starting point is provided in the layer P, the layer P undergoes material fracture, and peelability is exhibited with an appropriate peel strength. When a starting point is provided in a layer adjacent to the layer P, the layer P adjacent to the layer undergoes material fracture, and peelability is exhibited with an appropriate peel strength. Hereinafter, the expression "the peelability is exhibited with an appropriate peel strength" is also referred to as excellent peelability.

### (2-2) Thickness of layer P

The thickness of the layer P is 0.5 to 500 µm. When the layer P is excessively thin, excellent peelability cannot be obtained, so that recycling becomes difficult. When the layer P is excessively thick, the peel strength becomes excessive, so that recycling becomes difficult. From such a viewpoint, the lower limit of the thickness of the layer P is preferably 1 µm or more, and more preferably 2 µm or more. The upper limit of the thickness is preferably 300 µm or less, and more preferably 200 µm or less. That is, as a preferable thickness range, 1 to 300 µm or 2 to 200 µm can be exemplified.

### (2-3) Composition constituting layer P

The layer P is composed of a composition containing a polypropylene-based resin and an ethylene-C4 to C10 α-olefin copolymer. The content of the ethylene-C4 to C10 α-olefin copolymer in the layer P is 10 to 40 wt%. When the content is excessively low, the peeling properties of the multilayer sheet become unstable. When the content is excessively high, the peel strength decreases, or it becomes difficult to produce the multilayer sheet. From such a viewpoint, the lower limit of the content is preferably 15 wt% or more. The upper limit of the content is preferably 35 wt% or less. That is, as a preferable content range, 15 to 35 wt% can be exemplified.

The layer P may or may not contain an inorganic filler. It is preferable that the layer P does not contain an inorganic filler, but when the layer P contains an inorganic filler, the amount of the inorganic filler is preferably 10 wt% or less, more preferably 3 wt% or less, and still more preferably 2 wt% or less based on the weight of the layer P. The lower limit of the amount of the inorganic filler in this case may be more than 0 wt%, but is preferably 0.1 wt% or more. The inorganic filler is not limited, but preferably the following can be used:

a powder filler including synthetic silicic acid, silicate and the like, such as calcium silicate, aluminum silicate, silicic acid, and anhydrous silicic acid; a plate-like filler such as talc, kaolinite, clay, and mica; a whisker-like filler such as basic magnesium sulfate whisker, calcium titanate whisker, aluminum borate whisker, sepiolite, processed mineral filler (PMF), xonotlite, potassium titanate, and ellestadite; a balloon-like filler such as glass balloon and fly ash balloon; and a fibrous filler such as glass fiber.

### 1) MFR

The MFR (230°C, load 2.16 kg) of the composition constituting the layer P is preferably 0.5 to 30 g/10 min. When the MFR exceeds the upper limit, it is difficult to prepare a polypropylene sheet-like part as a raw material of the multilayer sheet, and the peeling stability may deteriorate. When the MFR is less than the lower limit, it may be difficult to prepare a polypropylene sheet-like part. From such a viewpoint, the lower limit of the MFR is preferably 1 g/10 min or more, and more preferably 1.5 g/10 min or more. The upper limit of the MFR is preferably 15 g/10 min or less, and more preferably 7 g/10 min or less. That is, as a preferable range of the MFR, 1 to 15 g/10 min or 1.5 to 7 g/10 min can be exemplified. The MFR is measured according to JIS K7210-1 under the conditions of a temperature of 230°C and a load of 2.16 kg based on JIS K6921-2.

### 2) XSIV

The intrinsic viscosity (XSIV) of the normal temperature xylene soluble component of the composition is preferably 0.5 to 4 dL/g. When the XSIV exceeds the upper limit, the peeling stability may deteriorate. When the XSIV is less than the lower limit, the peel strength may excessively decrease. From such a viewpoint, the lower limit of the XSIV is preferably 1 dL/g or more, and the upper limit thereof is preferably 2.5 dL/g or less. That is, as a preferable range of the XSIV, 1 to 2.5 dL/g can be exemplified.

The XS can be acquired by a known method, and is preferably acquired by, for example, the following method.

In a flask containing 250 mL of o-xylene (solvent), 2.5 g of a polypropylene-based resin is placed, and the mixture is stirred at 135°C for 30 minutes with nitrogen purge using a hot plate and a reflux apparatus to completely dissolve the resin. Thereafter, the resulting solution is cooled (for example, about 1 hour at 25°C) and filtered with filter paper to separate a filtrate from a residue on the filter paper. The residual component obtained by removing the solvent from the filtrate is defined as a normal temperature xylene soluble component (XS). The solvent can be removed, for example, by drying the filtrate at 140°C under a nitrogen stream.

The intrinsic viscosity (IV) can be measured in tetrahydronaphthalene at 135°C using a capillary viscometer, for example, a capillary automatic viscometer (SS-780-H1, manufactured by SHIBAYAMA SCIENTIFIC CO., LTD.).

### 3) Composition

The composition constituting the layer P preferably contains a polypropylene-based resin having a phase structure in which a component (A2) is dispersed in a component (A1). The component (A1) is 60 to 90 wt% of a propylene (co)polymer containing 0 to 5 wt% of a comonomer-derived unit selected from C2 to C10 α-olefins (excluding C3 α-olefins). The component (A2) is 10 to 40 wt% of an ethylene-C4 to C10 α-olefin copolymer containing 10 to 35 wt% of a C4 to C10 α-olefin-derived unit.

The comonomers selected from C2 to C10 α-olefins naturally do not contain C3 α-olefins. The upper limit of the comonomer content is preferably 5 wt% or less, more preferably 4 wt% or less, and still more preferably 3 wt% or less. When the component (A1) contains a comonomer, the lower limit of the comonomer content is preferably more than 0 wt%, and more preferably 0.1 wt% or more. When the component (A1) contains a comonomer, ethylene is preferable from the viewpoint of economic efficiency. The component (A1) is roughly classified into an aspect in which the component (A1) contains a comonomer-derived unit and an aspect in which the component (A1) does not contain a comonomer-derived unit, which will be described later.

The content of the component (A1) in the polypropylene-based resin is 60 to 90 wt%. When the content of the component (A1) is small, it is difficult to produce a polypropylene-based resin, and the peel strength may decrease. Therefore, the upper limit of the content of the component (A1) is preferably 85 wt% or less, and the lower limit thereof is preferably 65 wt% or more. Therefore, as a preferable range of the content, 65 to 85 wt% can be exemplified.

The component (A2) is an ethylene-C4 to C10 α-olefin copolymer containing 10 to 35 wt% of a C4 to C10 α-olefin-derived unit. The C4 to C10 α-olefin is not limited, but is preferably 1-butene, 1-hexene, or 1-octene, and more preferably 1-butene.

When the amount of the C4 to C10 α-olefin-derived unit is excessively large, the peel strength may decrease, and when the amount is excessively small, the peeling stability may deteriorate. From such a viewpoint, the lower limit of the content is preferably 15 wt% or more, and more preferably 18 wt% or more. The upper limit thereof is preferably 32 wt% or less, and more preferably 27 wt% or less. Therefore, as a preferable range of the content, 15 to 32 wt% or 18 to 27 wt% can be exemplified.

The content of the component (A2) in the polypropylene-based resin is 10 to 40 wt%. When the content of the component (A2) is excessively large, it is difficult to produce a polypropylene-based resin, and the peel strength may decrease. When the content is excessively small, the peeling stability may deteriorate. From such a viewpoint, the lower limit of the content is preferably 15 wt% or more, and the upper limit is preferably 35 wt% or less. Therefore, as a preferable range of the content, 15 to 35 wt% can be exemplified.

The total amount of ethylene in the polypropylene-based resin and the content of the ethylene-derived unit of the component (A1) are measured by a known method, and preferred measurement methods will be described below.

A spectrum of ¹³C-NMR for a copolymer sample dissolved in a mixed solvent containing 1,2,4-trichlorobenzene and deuterated benzene is obtained using AVANCE III HD400, manufactured by Bruker (¹³C resonance frequency: 100 MHz) under the conditions of measurement temperature: 120°C, flip angle: 45 degrees, pulse interval: 7 seconds, sample rotating speed: 20 Hz, and number of scans: 6000 times. The mixed solvent is preferably 1,2,4-trichlorobenzene/deuterated benzene/hexamethyldisiloxane at a volume ratio of 30/10/1.

Using the spectrum obtained above, the total amount of ethylene (wt%) in the polypropylene-based resin is determined by a method described in the literature of Kakugo, Y. Naito, K. Mizunuma, and T. Miyatake, Macromolecules, 15, 1150 to 1152 (1982). When the component (A1) is measured as a sample, the total amount of ethylene (wt%) obtained by the above method is the ethylene unit content (wt%) of the component (A1).

When the component (A1) contains a comonomer-derived unit other than ethylene, the content of the comonomer unit is determined in the same manner as the ethylene-derived unit content.

In the polypropylene-based resin composed of the component (A1) and the component (A2), the ethylene unit content in the component (A2) is also measured by a known method, and preferred measurement methods will be described below.

When the component (A1) is a propylene homopolymer, the ethylene unit content (wt%) of the component (A2) is determined by performing calculation in the same manner as for the total amount of ethylene, except that the integrated intensity T'ββ determined by the following formula is used instead of the integrated intensity of Tββ determined at the time of measuring the total amount of ethylene of the polypropylene-based resin by the method described in the above literature. $T ′ ββ = 0.98 \times Sαγ \times A ′ / \left(1-0.98\times A′\right)$

Here, A' = Sαγ/(Sαγ + Sαδ), and A' is calculated from Sαγ and Sαδ described in the above literature.

In the polypropylene-based resin composed of the component (A1) and the component (A2), the content of the ethylene-derived unit in the component (A2) when the component (A1) contains an ethylene unit is determined from the following formula in a case where the weight ratio (component (A2)/[component (A1) + component (A2)]) is clear from the polymerization conditions. In the formula, the "resin" means a polypropylene-based resin.

Ethylene-derived unit content (unit: wt%) of component (A2) = [total amount of ethylene of resin - ethylene-derived unit content of component (A1) × content ratio of component (A1) in resin]/(content ratio of component (A2) in resin)

When the component (A1) is a propylene homopolymer, the weight ratio of component (A2)/[component (A1) + component (A2)] is determined by the following formula. 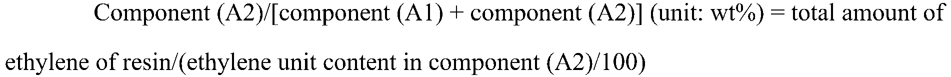 Component (A2)/[component (A1) + component (A2)] (unit: wt%) = total amount of ethylene of resin/(ethylene unit content in component (A2)/100)

### 4) Mechanism of expression of excellent peelability

The layer P contains a specific amount of the component (A2), whereby the layer P exhibits excellent peelability. The reason for this is not limited, but is presumed as follows. The bonding strength of the interface between the component (A1) and the component (A2) in the layer P is lower than the fracture strength of the composition itself constituting the layer P, and is lower than the bonding strength of the interface between respective layers. Therefore, when an external force is applied to peel a layer present on the layer P, cracking preferentially occurs at the interface between the component (A1) and the component (A2) in the layer P. The crack successively propagates to the components (A2) which are arranged and dispersed. As a result, it is considered that the layer P undergoes material fracture, and excellent peelability is exhibited.

As described above, the multilayer sheet according to the present embodiment is roughly classified into two preferable aspects by the component (A1). Hereinafter, the aspects will be described separately.

### [First aspect]

In the present aspect, the component (A1) is a propylene homopolymer. For convenience, the component (A1) in the present aspect is referred to as a component (A1'), and the layer P is referred to as a layer P'. That is, in the present aspect, the layer P is a layer P' containing a polypropylene-based resin having a phase structure in which the component (A2) is dispersed in the component (A1'). The polypropylene-based resin having a phase structure in which the component (A2) is dispersed in the component (A1') is heterophasic polypropylene in which the component (A2) is dispersed in a propylene homopolymer matrix.

In the aspect illustrated in Fig. 1, the biaxially stretched polypropylene layer 12 other than the layer P' may be composed of a known material. The biaxially stretched polypropylene layer 12 is preferably composed of a composition containing a propylene homopolymer or a composition containing an ethylene-propylene copolymer containing more than 0 and up to 5 wt% of an ethylene-derived unit.

A more preferable configuration of the multilayer sheet of the present aspect is illustrated in Fig. 2(1). In the drawing, reference alphanumeric 12H denotes a first biaxially stretched polypropylene layer, reference alphanumeric 12L denotes a second biaxially stretched polypropylene layer, and reference alphanumeric 10P' denotes the layer P'. In this drawing, the structure of a part of the multilayer sheet is described. The multilayer sheet includes an alternating layer in which the layer 12H and the layer 12L are alternately laminated, and includes the layer 10P' between the two layers 12L. The layer 12H constitutes the main layer of the multilayer sheet, and the layer 12L has a function of bonding the main layers to each other. Therefore, the softening point Tsh of the layer 12H is higher than the softening point Tsl of the layer 12L. The softening point Tsp' of the layer 10P' preferably satisfies the relationship of Tsh ≥ Tsp' > Tsl. The melting point can be used as an index of the softening point. The melting point is defined as the peak temperature of the melting curve obtained through measurement of a sample by DSC under the condition of a heating rate of 10°C/min from 30°C to 230°C.

In order to further enhance adhesion between the layer 10P' and the layer 12L, the multilayer sheet may have a polypropylene layer 13 having a softening point lower than Tsp' between the layer 10P' and the layer 12L (Fig. 2(2)). The polypropylene layer 13 may be composed of a known material. Preferably, the polypropylene layer 13 is composed of a composition containing an ethylene-propylene copolymer containing more than 1 wt% and 5 wt% or less of an ethylene-derived unit.

There may be a plurality of layers 10P'. The layer 10P' may be a non-stretched layer or a uniaxially or biaxially stretched layer. From the viewpoint of increasing the rigidity of the multilayer sheet, all the layers 10P' are preferably biaxially stretched layers. From the viewpoint of increasing the rigidity of the multilayer sheet, when a plurality of layers 10P' are present, the number of non-stretched layers 10P' is preferably 1 or less.

The polypropylene layer 13 may be a non-stretched layer or a uniaxially or biaxially stretched layer. From the viewpoint of increasing the rigidity of the multilayer sheet, all the polypropylene layers 13 are preferably biaxially stretched layers. From the viewpoint of increasing the rigidity of the multilayer sheet, when a plurality of polypropylene layers 13 are present, the number of non-stretched polypropylene layers 13 is preferably 2 or less.

Since the respective interlayers are fused, the multilayer sheet is an integrated sheet. Whether the respective interlayers of the sheet are fused and integrated can be confirmed by cross-sectional observation with a polarization microscope, as described in International Publication No. WO 2020/075755. In addition, the integrated multilayer sheet is produced, for example, in accordance with the method described in International Publication No. WO 2022/102705. That is, the multilayer sheet is produced from main layers that have high rigidity and are relatively difficult to melt, and adhesive layers that are relatively easy to melt and fuse the main layers. Hereinafter, a preferred production method in the present aspect will be described.

A preferred production method in the present aspect includes fusing interlayers of a precursor in which a biaxially stretched polypropylene sheet-like part for forming a biaxially stretched polypropylene layer and a sheet-like part for forming the layer P' are laminated.

### 1) Preparation of precursor

Fig. 3 illustrates an outline of the production method. In the drawing, reference alphanumeric 1' denotes a precursor. The precursor 1' is prepared by laminating the following coextruded layers. These coextruded layers are prepared according to a known method.
Two-layer biaxially stretched polypropylene layer coextruded layer
Coextruded layer in which polypropylene layers 13 are respectively laminated on both sides of the layer 10P'
Three-layer biaxially stretched polypropylene layer coextruded layer
Two-layer biaxially stretched polypropylene layer coextruded layer
For ease of understanding, in the drawing, a space is provided between the coextruded layers of the precursor 1', but the coextruded layers are actually in contact with each other.

### 2) Thermal fusing

Next, a heating element is brought into contact with the outermost layers of the precursor 1' to thermally fuse the respective interlayers. The melting point Tmₒᵤₜ of the outermost layer and the temperature T of the heating element preferably satisfy the relationship Tmₒᵤₜ - T ≥ 4 (°C). By satisfying the relationship, the interlayers can be favorably fused. The temperature difference is more preferably 6°C or higher from this point of view. The upper limit of the temperature difference is not limited, but is preferably 40°C or lower, and more preferably 30°C or lower from the viewpoint of production of polypropylene. T can be measured by any method, but is preferably measured by using a non-contact type thermometer such as a radiation thermometer. Tmₒᵤₜ corresponds to the melting point of the layer disposed as the outermost layer. The melting point is defined as the peak temperature of the melting curve obtained through measurement by DSC under the condition of a heating rate of 10°C/min from 30°C to 230°C.

The temperature T preferably satisfies the relationship of Tmh ≥ T ≥ Tml, and more preferably satisfies the relationship of Tmh ≥ T ≥ Tml + 10 (°C). Tmh is the melting point of the layer 12H and Tml is the melting point of the layer 12L. When T exceeds the upper limit, the laminate is melted, and mechanical properties may deteriorate. When T is less than the lower limit, the interlayers are not sufficiently fused, and mechanical properties may deteriorate. The specific temperature of the heating element is preferably approximately 120 to 190°C, more preferably 140 to 170°C, and even more preferably 150 to 165°C.

Preferably, this process is successively performed using a heating roll as the heating element. Specifically, the interlayers are fused by passing the precursor of the multilayer sheet between two heated rolls. A heating roll including two or more pairs of rolls, each pair being composed of two rolls, may be used as the heating element for fusing. The pressure to be applied at that time is appropriately adjusted. The take-up speed in the roll forming is not limited, but is preferably approximately 0.05 to 10 m/min.

Examples of the method other than the roll forming include press-bond molding and fusion molding. In addition, in the thermally fusing the sheet-like parts, a pressure is preferably applied in order to suppress thermal shrinkage and further promote orientation. The pressure at that time is appropriately adjusted according to the fusing temperature.

The layer in which the polypropylene layers 13 are respectively laminated on both sides of the layer 10P' is preferably a coextruded layer formed by coextrusion. The total number of layers in the coextruded layer having a structure in which the polypropylene layers 13 are respectively laminated on both sides of the layer 10P' is preferably 3 to 7, more preferably 3 to 5, and still more preferably 3. The thickness of one layer of the layer 10P' is 0.5 µm to 500 µm, preferably 1 µm to 300 µm, and more preferably 2 µm to 200 µm. The thickness of one layer of the polypropylene layer 13 is preferably 2 µm to 200 µm. From the viewpoint of ease of production, in the coextruded layer in which the polypropylene layers 13 are respectively laminated on both sides of the layer 10P', when layers constituting the coextruded layer are referred to as "constituent layers", it is preferable that all constituent layers are biaxially stretched layers, all constituent layers are uniaxially stretched layers, or all constituent layers are non-stretched layers.

The layers 12H and 12L are also preferably coextruded layers. The total number of layers in the coextruded layer is preferably 2 to 6, more preferably 2 to 5, still more preferably 2 to 4, and particularly preferably 2 to 3. The thickness of one layer of the layer 12H is preferably 20 µm to 300 µm. The thickness of one layer of the layer 12L is preferably 2 µm to 200 µm.

In the multilayer sheet of the present aspect, the layers corresponding to the main layer are the layer 10P' and the layer 12H, and the layers corresponding to the adhesive layer are the layer 12L and the polypropylene layer 13. The total thickness (sum of the thickness) of the layers corresponding to the main layer is defined as Dh and the total thickness (sum of the thickness) of the layers corresponding to the adhesive layer is defined as Dl. When the ratio Dh/Dl is excessively small, the rigidity of the multilayer sheet is insufficient, and when the ratio is excessively large, fusing properties between layers of the multilayer sheet are insufficient. For the balance between fusing properties and rigidity, the ratio Dh/Dl is preferably 1 to 30, more preferably 1 to 25, and even more preferably 4 to 15. The thickness of each layer may be the same or different. The thickness of each layer is appropriately adjusted so that the ratio falls within the above range.

### [Second aspect]

Hereinafter, a second aspect will be described. As for the matters not specifically mentioned in the second aspect, the matters in the first aspect are incorporated by reference.

In the present aspect, the component (A1) is a propylene copolymer containing more than 0 wt% and 5 wt% or less of a comonomer-derived unit selected from C2 to C10 α-olefins (excluding C3 α-olefins). For convenience, the component (A1) in the present aspect is referred to as a component (A1"), and the layer P is referred to as a layer P". That is, in the present aspect, the layer P is a layer P" containing a polypropylene-based resin having a phase structure in which the component (A2) is dispersed in the component (A1"). The polypropylene-based resin having a phase structure in which the component (A2) is dispersed in the component (A1") is heterophasic polypropylene in which the component (A2) is dispersed in a propylene copolymer matrix. The component (A1) may be a blend of the component (A1') which is a propylene homopolymer and the component (A1"). In this case, the weight ratio of the component (A1') : the component (A1") is preferably 10 to 50 : 90 to 50, and more preferably 20 to 40 : 80 to 60.

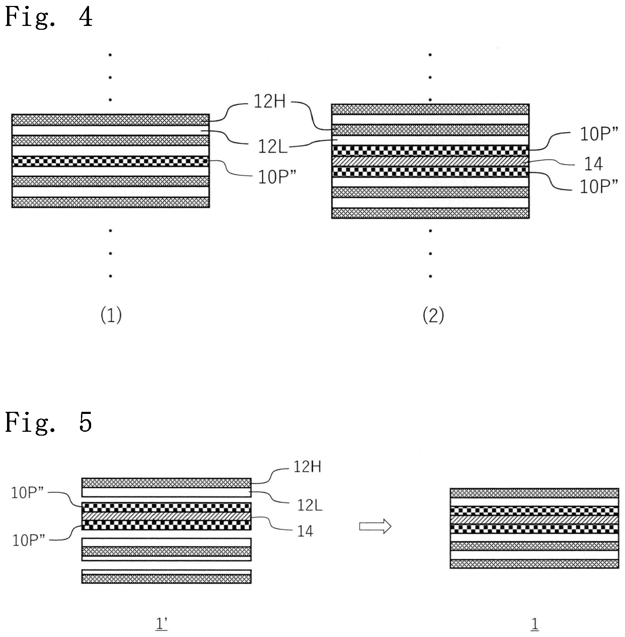

A more preferable configuration of the multilayer sheet of the present aspect is illustrated in Fig. 4(1). In the drawing, reference alphanumeric 10P" denotes the layer P". In this drawing, the structure of a part of the multilayer sheet is described. The multilayer sheet includes an alternating layer in which the layer 12H and the layer 12L are alternately laminated, and includes the layer 10P" between the two layers 12L. The softening point Tsp" of the layer 10P" preferably satisfies the relationship of Tsh > Tsp" ≥ Tsl or Tsh > Tsl > Tsp". Although not illustrated, a polypropylene layer 15 other than the layer 12L and the layer 12H can be provided between the layer 12L and the layer 10P". The polypropylene layer 15 may be composed of a known material. Preferably, the polypropylene layer 15 is composed of a composition containing an ethylene-propylene copolymer containing 1 to 5 wt% of an ethylene-derived unit. The softening point of the polypropylene layer 15 may be higher than Tsl.

The multilayer sheet may have a configuration of layer 10P"/polypropylene layer 14/layer 10P" (Fig. 4(2)). The polypropylene layer 14 may have a softening point higher than Tsp". The polypropylene layer 14 may be composed of a known material. Preferably, the polypropylene layer 14 is composed of a composition containing a (ethylene-)propylene (co)polymer containing 0 to 2 wt% of an ethylene-derived unit. The polypropylene layer 14 may be the layer 12H.

There may be a plurality of layers 10P". The layer 10P" may be a non-stretched layer or a uniaxially or biaxially stretched layer. From the viewpoint of increasing the rigidity of the multilayer sheet, all the layers 10P" are preferably biaxially stretched layers. In addition, from the viewpoint of increasing the rigidity of the multilayer sheet, when a plurality of layers 10P" are present, the number of non-stretched layers 10P" is preferably 1 or less.

The polypropylene layer 14 may be a non-stretched layer or a uniaxially or biaxially stretched layer. From the viewpoint of increasing the rigidity of the multilayer sheet, all the polypropylene layers 14 are preferably biaxially stretched layers. From the viewpoint of increasing the rigidity of the multilayer sheet, when a plurality of polypropylene layers 14 are present, the number of non-stretched polypropylene layers 14 is preferably 1 or less.

A preferred production method in the present aspect includes fusing interlayers of a precursor in which a biaxially stretched polypropylene sheet-like part for forming a biaxially stretched polypropylene layer and a sheet-like part for forming the layer P" are laminated.

### 1) Preparation of precursor

Fig. 5 illustrates an outline of the production method. In the drawing, reference alphanumeric 1' denotes a precursor. The precursor 1' is prepared by laminating the following coextruded layers. These coextruded layers are prepared according to a known method.
Two-layer biaxially stretched polypropylene layer coextruded layer
Coextruded layer in which the layers 10P" are respectively laminated on both sides of the polypropylene layer 14
Three-layer biaxially stretched polypropylene layer coextruded layer
Two-layer biaxially stretched polypropylene layer coextruded layer
For ease of understanding, in the drawing, a space is provided between the coextruded layers of the precursor 1', but the coextruded layers are actually in contact with each other.

### 2) Thermal fusing

Next, a heating element is brought into contact with the outermost layers of the precursor 1' to thermally fuse the respective interlayers. This process is as described in the first aspect.

The layer in which the layers 10P" are respectively laminated on both sides of the polypropylene layer 14 is preferably a coextruded layer. The total number of layers in the coextruded layer having a structure in which the layers 10P" are respectively laminated on both sides of the polypropylene layer 14 is preferably 3 to 7, more preferably 3 to 5, and still more preferably 3. The thickness of one layer of the polypropylene layer 14 is preferably 20 µm to 300 µm. The thickness of one layer of the layer 10P" is 0.5 µm to 500 µm, preferably 1 µm to 300 µm, and more preferably 2 µm to 200 µm. From the viewpoint of ease of production, in the coextruded layer in which the layers 10P" are respectively laminated on both sides of the polypropylene layer 14, when layers constituting the coextruded layer are referred to as "constituent layers", it is preferable that all constituent layers are biaxially stretched layers, all constituent layers are uniaxially stretched layers, or all constituent layers are non-stretched layers.

The layers 12H and 12L are preferably composed of coextruded layers. The total number of layers in the coextruded layer is preferably 2 to 6, more preferably 2 to 5, still more preferably 2 to 4, and particularly preferably 2 to 3. The thickness of one layer of the layer 12H is preferably 20 µm to 300 µm. The thickness of one layer of the layer 12L is preferably 2 µm to 200 µm.

In the multilayer sheet of the present aspect, the layers corresponding to the main layer are the polypropylene layer 14 and the layer 12H, and the layers corresponding to the adhesive layer are the layer 10P" and the layer 12L. The total thickness (sum of the thickness) of the layers corresponding to the main layer is defined as Dh and the total thickness (sum of the thickness) of the layers corresponding to the adhesive layer is defined as Dl. When the ratio Dh/Dl is excessively small, the rigidity of the multilayer sheet is insufficient, and when the ratio is excessively large, fusing properties between layers of the multilayer sheet are insufficient. For the balance between fusing properties and rigidity, the ratio Dh/Dl is preferably 1 to 30, more preferably 1 to 25, and even more preferably 4 to 15. The thickness of each layer may be the same or different. The thickness of each layer is appropriately adjusted so that the ratio falls within the above range.

### [Other layers]

The multilayer sheet can be provided with a top layer. The top layer can be provided by a known method. For example, these layers can be provided by applying coating or the like. The type of the coating film is not limited as long as the coating film is one used in the coating field.

The top layer is preferably a coating film used for coating vehicle bodies. Examples of such a coating film include epoxy-based coating films, urethane-based coating films, and polyester-based coating films. A lower layer coating film (primer coating film), a middle layer coating film, or an upper layer coating film (clear coating film) may be provided as necessary. In the case where the multilayer sheet is used as a sheet to be coated (coating sheet), the surface to be coated preferably has a functional group.

The multilayer sheet can be provided with a surface active layer according to a conventional method. For example, the surface of the multilayer sheet is subjected to plasma treatment or corona treatment to thereby impart an oxygen-containing functional group to the surface, and this can be used as a surface active layer. Alternatively, an oxygen-containing functional group can be imparted to the surface of the multilayer sheet by preparing a polypropylene film having a functional group and disposing the polypropylene film on the outermost layer of the precursor. The above layer can also be used as a surface active layer.

A polypropylene film having an oxygen-containing functional group can be obtained by forming a publicly known polypropylene such as maleic anhydride-modified polypropylene or epoxy-modified polypropylene into a film. The thickness of the functional group-containing film is not limited, but is preferably less than 150 µm. The functional group-containing film may or may not be biaxially stretched. In the lamination process, a polypropylene film having a functional group and a polypropylene sheet having no functional group may be simultaneously laminated, or polypropylene sheets having no functional group may be laminated to produce a laminate sheet in advance, and then a polypropylene film having a functional group may be laminated on the surface of the sheet. However, the simultaneous lamination method is preferred in consideration of workability.

The production method may further include a publicly known process such as cooling the multilayer sheet obtained in the preceding process. Non-limiting examples of the cooling method include a method of cooling at room temperature or a method of cold-pressing at room temperature or at 10 to 20°C.

### (3) Mechanical properties and heat resistance

The multilayer sheet and a formed article such as a container obtained from the multilayer sheet have excellent mechanical properties. For example, the sheet and the formed article preferably have a flexural modulus (JIS K7171) of 2,000 MPa or more, and more preferably 2,500 MPa or more as rigidity. The multilayer sheet is also excellent in cold impact resistance. For example, the multilayer sheet and the formed article preferably have a Charpy impact strength (-30°C, JIS K7111-1) of 10 KJ/m² or more. Furthermore, the multilayer sheet preferably has a density of 0.90 to 0.93 (0.90 to 1.0 in a case where the multilayer sheet contains an inorganic filler) g/cm³.

### (4) Surface

A functional group can be applied to the surface of the multilayer sheet. As the functional group, an oxygen-containing functional group is preferred. Examples of the oxygen-containing functional group include a carboxyl group, a carboxylate group, an acid anhydride group, a hydroxyl group, an aldehyde group, and an epoxy group. These functional groups enhance adhesion between the multilayer sheet and other materials. In particular, providing a coating film on a layer having a functional group is preferable because adhesion between the layer and the coating film is improved.

### (5) Nucleating agent

The layer P and other layers may be composed of a composition containing a nucleating agent, or may be composed of a composition or polymer not containing a nucleating agent. The nucleating agent is an additive used for increasing crystalline components in resin to increase rigidity. A known additive can be used as such an additive. The amount of the nucleating agent is preferably 1 part by weight or less based on 100 parts by weight of the polymer from the economic viewpoint.

### (6) Other additives

The composition constituting each layer may contain commonly used additives that are normally used for polyolefins, such as antioxidants, chlorine absorbers, heat-resistant stabilizers, light stabilizers, ultraviolet absorbers, internal lubricants, external lubricants, antiblocking agents, anti-static agents, anti-fogging agents, flame retardants, dispersants, copper corrosion inhibitors, neutralizing agents, plasticizers, crosslinking agents, peroxides, extension oils, organic pigments, or inorganic pigments as long as desired effects are not impaired. The amount of each additive to be added may be a publicly known amount. In addition, the composition may contain a synthetic resin other than the polypropylene-based resin (for example, modified polypropylene) or a synthetic rubber as long as desired effects are not impaired. One type of synthetic resin or synthetic rubber may be used, or two or more types thereof may be used.

### 2. Application

The multilayer sheet has a high degree of orientation in the in-plane direction and a specific high-order structure as well as exhibits less dependency of the degree of orientation in the thickness direction. Thus, the multilayer sheet has excellent mechanical properties while being lightweight. Furthermore, since the multilayer sheet has excellent peelability, the top layer and the like can be easily peeled off, so that the multilayer sheet is also excellent in recyclability. Therefore, the multilayer sheet has excellent recyclability and excellent rigidity as well, and thus can be used for automobile parts, electrical/electronic parts, housing parts, and the like as a substitute for a steel sheet. In addition, the multilayer sheet is useful as a food packaging material, a container, a lid, and the like which are thin and lightweight and have excellent unsealing properties. Furthermore, the multilayer sheet has high rigidity, and thus is useful as sundries, daily necessities, household electric appliance parts, toy parts, furniture parts, building parts, packaging components, industrial materials, distribution materials, agricultural materials, and the like.

Since the multilayer sheet can be used as a material having recyclability as a substitute for a steel sheet, a recycling method will be described below using an automobile material as an example.

The peel strength is not limited, but is preferably 15 to 50 N/15 mm, more preferably 15 to 40 N/15 mm, and still more preferably 15 to 35 N/15 mm in one aspect from the viewpoint of the balance between high adhesion and high peeling properties. The peel strength is determined by a 180-degree peeling test using a strip-shaped test piece having a width of 15 mm. In one aspect, the distance between chucks is 50 mm, the moving speed of the chucks is 300 mm/min, the tensile length is 100 mm, and the initial load and the integrated average load in the stable section of 50 mm during material failure is used as the test values.

The peel strength is preferably measured by the following method.

The measurement of the peel strength is performed by a 180-degree peeling test. The multilayer sheet is cut into a strip having a width of 15 mm to obtain a test piece. The top layer and the lowermost layer of the test piece are respectively gripped with chucks, and the distance between the chucks is set to 50 mm. A tensile test is performed by moving the chucks at a speed of 300 mm/min. The test piece is pulled by 100 mm or more, and an initial load and an integrated average load in a stable section of 50 mm during material failure as test values are used as the peel strength. As the testing apparatus, for example, AUTO COM universal testing machine manufactured by T.S.E. Co., Ltd. can be used.

Since the multilayer sheet has good adhesion between layers, there is almost no discontinuity between the layers. Thus, the multilayer sheet can be dealt with as an integrated sheet.

### EXAMPLES

### 1. Production of polypropylene-based resin composition

### [Polymer a]

A solid catalyst used for polymerization was prepared by the method described in Example 1 of JP 2011-500907 A. The solid catalyst is a catalyst in which Ti and diethyl-2,3-(diisopropyl)succinate as an internal donor are supported on MgCl₂ by the method described in the above patent publication. The solid catalyst, triethylaluminium (TEAL), and dicyclopentyldimethoxysilane (DCPMS) were brought into contact at 12°C for 24 minutes in an amount such that the weight ratio of TEAL to the solid catalyst was 11 and the weight ratio of TEAL to DCPMS was 15. The obtained catalyst system was maintained in a liquid propylene in the form of suspension at 20°C for 5 minutes to carry out prepolymerization. The obtained prepolymerization product was introduced into a polymerization reactor, and then hydrogen, propylene and ethylene were fed to the reactor. Then, a polymer a as a propylene-ethylene copolymer was obtained by setting the polymerization temperature to 80°C, the hydrogen concentration to 0.17 mol%, and the ethylene concentration to 0.08 mol%, and adjusting the polymerization pressure. The polymer a (component (A1), hereinafter, also simply referred to as "PP component") contained 0.36 wt% of an ethylene-derived unit (hereinafter, also simply referred to as "C2") and had a MFR (temperature: 230°C, load: 2.16 kg) of 4.4 g/10 min.

### [Polymer b]

A solid catalyst used for polymerization was prepared by the method described in Example 1 of EP 674991. The solid catalyst was a catalyst in which Ti and diisobutyl phthalate as an internal donor were supported on MgCl₂ by the method described in the above patent publication.

The solid catalyst, TEAL, and dicyclopentyldimethoxysilane (DCPMS) were brought into contact at -5°C for 5 minutes in an amount such that the weight ratio of TEAL to the solid catalyst was 11 and the weight ratio of TEAL to DCPMS was 3. The obtained catalyst system was maintained in a liquid propylene in the form of suspension at 20°C for 5 minutes to carry out prepolymerization. The obtained prepolymerization product was introduced into a polymerization reactor, and then hydrogen, propylene and ethylene were fed to the reactor. Then, a polymer b as a propylene-ethylene copolymer was obtained by setting the polymerization temperature to 75°C, the hydrogen concentration to 0.44 mol%, and the ethylene concentration to 1.07 mol%, and adjusting the polymerization pressure. The polymer b (PP component) contained 4.0 wt% of C2 and had a MFR (temperature: 230°C, load: 2.16 kg) of 7.5 g/10 min.

### [Polymer c]

A polymer c was obtained in the same manner as the polymer b except that the hydrogen concentration was changed to 0.25 mol% and the ethylene concentration was changed to 0.44 mol%. The polymer c contained 2.0 wt% of C2 and had a MFR (temperature: 230°C, load: 2.16 kg) of 5.9 g/10 min.

### [Polymer x₁]

A solid catalyst in which Ti and diisobutyl phthalate as an internal donor were supported on MgCl₂ was prepared by the method described in Example 5 of EP 728769. Subsequently, the solid catalyst, triethylaluminium (TEAL) as an organic aluminum compound, and dicyclopentyldimethoxysilane (DCPMS) as an external electron donor compound were brought into contact with each other at 12°C for 24 minutes in an amount such that the weight ratio of TEAL to the solid catalyst was 20 and the weight ratio of TEAL to DCPMS was 10. The obtained catalyst system was maintained in a liquid propylene in the form of suspension at 20°C for 5 minutes to carry out prepolymerization. The obtained prepolymerization product was introduced into a first-stage polymerization reactor of a polymerization apparatus including two stages of polymerization reactors in series, ethylene was fed to propylene in a liquid phase state to produce a propylene-ethylene random copolymer as the component (A1), and an ethylene-1-butene copolymer as the component (A2) was produced in a second-stage gas-phase polymerization reactor. During the polymerization, the temperature and pressure were adjusted and hydrogen was used as a molecular weight modifier. The polymerization temperature and the ratio of the reactants were as follows: in the first-stage reactor, the polymerization temperature was 70°C, the hydrogen concentration was 0.060 mol%, and the ethylene concentration was 0.84 mol%, and in the second-stage reactor, the polymerization temperature was 80°C, H2/C2 was 0.26 by molar ratio, and C4/(C2 + C4) was 0.48 by molar ratio. The polymerization times of the first stage and the second stage were adjusted so that the amount of the component (A2) was 18 wt%.

### [Polymer x₂]

In the first-stage reactor, a propylene homopolymer was polymerized by changing the hydrogen concentration to 0.05 mol% without feeding ethylene, and in the second-stage reactor, H2/C2 was changed to 0.22 by molar ratio and C4/(C2 + C4) was changed to 0.52 by molar ratio, and the polymerization times of the first-stage and second-stage were adjusted so that the amount of the ethylene-1-butene copolymer as the component (A2) was 30 wt%. A polymer x₂ was obtained by the same production method as in the case of the polymer x₁ except for the above-described difference.

### [Polymer x₃]

In the first-stage reactor, the hydrogen concentration was changed to 0.83 mol%, and in the second-stage reactor, H2/C2 was changed to 0.30 by molar ratio and C4/(C2 + C4) was changed to 0.40 by molar ratio, and the polymerization times of the first stage and the second stage were adjusted so that the amount of the ethylene-1-butene copolymer as the component (A2) was 32 wt%. A polymer x₃ was obtained by the same production method as in the case of the polymer x₁ except for the above-described change.

### [Production of polymer compositions A to C and X₁ to X₃]

To 100 parts by weight of each polymer (a to c, x₁ to x₃) obtained above, 0.2 parts by weight of an antioxidant (B225, manufactured by BASF SE) and 0.05 parts by weight of a neutralizing agent (calcium stearate, manufactured by TANNAN KAGAKU KOGYO CO., LTD.), 0.05 parts by weight of MilladNX8000J (manufactured by Milliken Japan) as a nucleating agent for the polymer a, 0.10 parts by weight of ADK STAB NA-21 (manufactured by ADEKA CORPORATION) as a nucleating agent for the polymer c, and 0.25 parts by weight of ADK STAB NA-71 (manufactured by ADEKA CORPORATION) as a nucleating agent for the polymer x₁ were blended and mixed with stirring by a Henschel mixer for 1 minute. The mixture was melt-kneaded using a single-screw extruder NVC φ50 mm, manufactured by Nakatani Machinery Ltd. at a cylinder temperature of 230°C, and the extruded strand was cooled in water, followed by cutting with a pelletizer to obtain resin compositions (polymer compositions A to C and X₁ to X₃) in the form of pellets.

### [Resin compositions Y₃, Y₅ to Y₈, and Z]

Polymer compositions X₁ to X₃ were blended in the weight ratio shown in Table 1, and 0.1 parts by weight of dimyristyl thiodipropionate (dimyristyl thiodipropionate (DMTP), manufactured by Mitsubishi Chemical Corporation) as an antioxidant was further added to each blend of the polymer compositions, followed by stirring with a Henschel mixer for 1 minute to obtain a mixture. Next, the mixture was fed to an extruder (TEX-30α, co-rotation twin-screw extruder, manufactured by The Japan Steel Works, Ltd.) set at a screw temperature of 230°C, and melt-kneaded (twin-screw melt-kneading). Furthermore, the molten mixture was discharged from the extruder, cooled to form strands, and the strands were cut to prepare pellets of the resin composition.

### 2. Preparation of biaxially stretched sheet

### [Biaxially stretched sheet AAB]

Using a 25 mmφ three-type three-layer film/sheet forming machine (manufactured by Thermo Plastics Industry Co., Ltd.), coextrusion was performed at an extruding temperature of 230°C so as to form a structure of polymer composition A/polymer composition A/polymer composition B, thereby obtaining an original sheet (size: 10 cm × 10 cm or more) having a thickness of 2.5 mm. The original sheet was subjected to simultaneous biaxial stretching (3.5 times × 3.5 times) at 165°C using a film stretching apparatus (KARO-IV, manufactured by Bruckner) to obtain a coextruded biaxially stretched sheet having a thickness of 0.20 mm. The thickness ratio was 1 : 18 : 1. Since the two polymer composition A layers are integrated, the sheet is exactly a two-layer sheet.

### [Other biaxially stretched sheets]

Biaxially stretched sheets were produced in the same manner as the biaxially stretched sheet AAB except that the polymer to be used and the conditions were changed as shown in Table 2. Hereinafter, the biaxially stretched sheet AAB is also simply referred to as "AAB". The same applies to the other sheets.

### [Unstretched sheet CX₂C_{U}-3]

Using a 25 mmφ three-type three-layer film/sheet forming machine (manufactured by Thermo Plastics Industry Co., Ltd.), coextrusion was performed at an extruding temperature of 230°C so as to form a structure of polymer composition C/polymer composition X₂/polymer composition C, thereby obtaining a sheet (size: 10 cm × 10 cm or more) having a thickness of 0.060 mm. The thickness ratio was 1 : 1 : 1.

### [Unstretched Sheet X_{3U}]

The polymer composition X₃ was extruded at an extruding temperature of 230°C using a 25 mmφ monolayer film/sheet forming machine (manufactured by Thermo Plastics Industry Co., Ltd.) to obtain a sheet (size: 10 cm × 10 cm or more) having a thickness of 0.060 mm.

### [Unstretched sheet Y_{8U}]

The polymer composition Y₈ was extruded at an extruding temperature of 230°C using a 25 mmφ monolayer film/sheet forming machine (manufactured by Thermo Plastics Industry Co., Ltd.) to obtain a sheet (size: 10 cm × 10 cm or more) having a thickness of 0.060 mm.

### 3. Production of multilayer sheet

### [Example 2-1]

A precursor having the following layer configuration was prepared.
AAB/X₁AX₁//X₁AX₁/BABx9/BAA
"//" indicates a position of an interface into which a polyimide tape having a thickness of 55 µm is inserted. Since the polyimide tape and polypropylene were not fused, the position where the polyimide tape had been inserted was used as a gripping portion in the peeling test.

Using a press molding machine manufactured by SHOJI Co., Ltd., which was heated to 163°C as a heating element, the respective interlayers of the precursor were thermally fused to produce a multilayer sheet as a laminate. At the time of pressing, the precursor was sandwiched between an aluminum plate having a thickness of 3 mm and a steel sheet having a thickness of 1 mm from the outside, and it was inserted into the press machine and pressurized at 4 MPa for 2 minutes. A multilayer sheet having a thickness of 2.3 mm was thus produced. The peel strength of the multilayer sheet was measured by a method described later. The results are shown in Table 3. Material fracture was observed in the layer X₁ which was adjacent to the interface "//" and located on the AAB side, and it was confirmed that the layer X₁ functions as a peeling layer. As the peel strength, the initial load was 34.9 N/15 mm and the integrated average load at 50 mm peeling was 33.2 N/15 mm, and these results revealed that the multilayer sheet had both excellent adhesion and excellent peelability.

### [Examples 2-2 to 2-10]

Multilayer sheets were produced and evaluated in the same manner as in Example 2-1 with the layer configuration as shown in Table 3. The multilayer sheets shown in Table 3 each correspond to the multilayer sheet of the second aspect. In Examples 2-2 to 2-7, the layer Y₇, the layer Z, the layer Y₅, the layer Y₇, the layer Z, and the layer Z functioned as peeling layers, respectively. In Examples 2-8 to 2-10, the layer X_{3U}, the layer Y_{8U}, and the layer Y₃ functioned as peeling layers, respectively. The results revealed that the multilayer sheet had both excellent adhesion and excellent peelability.

### [Examples 1-1 to 1-3]

Multilayer sheets were produced and evaluated in the same manner as in Example 2-1 with the layer configuration as shown in Table 4. The multilayer sheets shown in Table 4 each correspond to the multilayer sheet of the first aspect. In these examples, the respective layers X₂ functioned as peeling layers. The results revealed that the multilayer sheet had both excellent adhesion and excellent peelability.

### [Comparative Examples 1 to 7]

Multilayer sheets were produced and evaluated in the same manner as in Example 2-1 with the layer configuration as shown in Table 5. The results revealed that the multilayer sheets had poor peelability.

The layer configurations of examples are shown below.
Example 1-1: AAB/CX₂C//BAB×9/BAA
Example 1-2: AAB/CX₂C//BAB×2/BAA
Example 1-3: AAB/CX₂C_{U}-3//BAB×9/BAA
Example 2-1: AAB/X₁AX₁//X₁AX₁/BAB×9/BAA
Example 2-2: AAB/Y₇AY₇//Y₇AY₇/BAB×9/BAA
Example 2-3: AAB/ZAZ//ZAZ/BAB×9/BAA
Example 2-4: AAB/CY₅C//BAB×9/BAA
Example 2-5: AAB/CY₇C//BAB×9/BAA
Example 2-6: AAB/CZC//BAB×9/BAA
Example 2-7: CACx4/CZC//BAB×9/BAA
Example 2-8: AAB/X_{3U}//BAB×9/BAA
Example 2-9: AAB/Y_{8U}//BAB×9/BAA
Example 2-10: AAB/BAB/Y₃AY₃//Y₃AY₃/BAB×9/BAA
Comparative Example 1: X₂AX₂//X₂AX₂/BAB×9/BAA
Comparative Example 2: Y₃AY₃//Y₃AY₃/BAB×9/BAA
Comparative Example 3: Y₆AY₆//Y₆AY₆/BAB×9/BAA
Comparative Example 4: Y₇AY₇//Y₇AY₇/BAB×9/BAA
Comparative Example 5: ZAZ//ZAZ/BAB×9/BAA
Comparative Example 6: CX₂C-2//BAB×9/BAA
Comparative Example 7: AAB//BAB×4/BAA

**[Table 1-1]**

| Table 1 | | | | | | | |
|---|---|---|---|---|---|---|---|
| | | A | B | C | X₁ | X₂ | X₃ |
| | | | | | | | |
| MFR | g/10 min | 4.4 | 7.5 | 5.9 | 2.0 | 3.0 | 30 |
| C2 amount in component (A1) | wt% | 0.36 | 4.0 | 2.0 | 3.2 | 0 | 3.2 |
| C4 amount in component (A2) | wt% | - | - | - | 23 | 25 | 19 |
| Amount of component (A2) | wt% | 0 | 0 | 0 | 18 | 30 | 32 |
| XSIV | wt% | - | - | - | 1.1 | 1.3 | 1.0 |
| Amount of nucleating agent | wt% | 0.05 | 0 | 0.10 | 0.25 | 0 | 0 |

**[Table 1-2]**

| | | Y₃ | Y₅ | Y₆ | Y₇ | Y₈ | Z |
|---|---|---|---|---|---|---|---|
| | | X₁ : X₃ blend 75 : 25 | X₁ : X₃ blend 37 : 63 | X₁: X₃ blend 25 : 75 | X₂: X₃ blend 35 : 65 | X₁: X₂ blend 50 : 50 | X₁: X₂: Xₛ blend 33 : 34 : 33 |
| MFR | g/10 min | 5.0 | 11 | 14 | 13 | 2.4 | 6.0 |
| C2 amount in component (A1) | wt% | 3.2 | 3.2 | 3.2 | 2.1 | 1.7 | 2.2 |
| C4 amount in component (A2) | wt% | 22 | 20 | 20 | 21 | 24 | 22 |
| Amount of component (A2) | wt% | 21 | 27 | 28 | 31 | 24 | 27 |
| XSIV | wt% | 1.1 | 1.0 | 1.0 | 1.1 | 1.2 | 1.1 |
| Amount of nucleating agent | wt% | 0.19 | 0.09 | 0.06 | 0 | 0.13 | 0.08 |

**[Table 2]**

| Table 2 | | | | | | | | | | |
|---|---|---|---|---|---|---|---|---|---|---|
| Coextruded sheet (surface layer intermediate layer surface layer) | | AAB | BAB | AAC | CAC | X₁AX₁ | X₂AX₂ | Y₃AY₃ | Y₆AY₆ | Y₇AY₇ |
| Layer thickness ratio | | 1 : 18 : 1 | 1 : 18 : 1 | 1 : 8 : 1 | 1 : 8 : 1 | 1 : 8 : 1 | 1 18 : 1 | 1 : 8 : 1 | 1 18 : 1 | 1 18 : 1 |
| Thickness before stretching | mm | 2.5 | 2.5 | 1.0 | 1.0 | 1.0 | 1.0 | 1.0 | 1.0 | 1.0 |
| Thickness after stretching | µm | 200 | 200 | 30 | 30 | 30 | 30 | 30 | 30 | 30 |
| Stretching ratio | | 3.5 × 3.5 | 3.5 × 3.5 | 6 × 6 | 6 × 6 | 6 × 6 | 6 × 6 | 6 × 6 | 6 × 6 | 6 × 6 |
| Stretching method (simultaneously or sequentially) | | Simultaneous biaxial | Simultaneous biaxial | Simultaneous biaxial | Simultaneous biaxial | Simultaneous biaxial | Simultaneous biaxial | Simultaneous biaxial | Simultaneous biaxial | Simultaneous biaxial |
| | | | | | | | | | | |

| Table 2 (continued) | | | | | | | | | | |
|---|---|---|---|---|---|---|---|---|---|---|
| Coextruded sheet (surface layer intermediate layer surface layer) | | ZAZ | CX₂C | CX₂C-2 | CX₂C_{U}-3 | CY₅C | CY₇C | CZC | X_{3U} | Y_{8U} |
| Layer thickness ratio | | 1 : 8 : 1 | 1 : 8 : 1 | 1 : 8 : 1 | 1 : 1 : 1 | 1 : 8 : 1 | 1 : 8 : 1 | 1 : 8 : 1 | - | - |
| Thickness before stretching | mm | 1.0 | 1.0 | 1.0 | 0.060 | 1.0 | 1.0 | 1.0 | 0.060 | 0.060 |
| Thickness after stretching | µm | 30 | 30 | 60 | - | 30 | 30 | 30 | - | - |
| Stretching ratio | | 6 × 6 | 6 × 6 | 4 × 4 | - | 6 × 6 | 6 × 6 | 6 × 6 | - | - |
| Stretching method (simultaneously or sequentially) | | Simultaneous biaxial | Simultaneous biaxial | Simultaneous biaxial | Non-stretching | Simultaneous biaxial | Simultaneous biaxial | Simultaneous biaxial | Non-stretching | Non-stretching |

**[Table 3-1]**

| Table 3 | | | | | | |
|---|---|---|---|---|---|---|
| | Unit | Examples | | | | |
| | | 2-1 | 2-2 | 2-3 | 2-4 | 2-5 |
| Peeling layer compositions X, Y, Z | | X₁ | Y₇ | Z | Y₅ | Y₇ |
| Layer configuration | | AAB/X₁AX₁//X₁AX₁ /BAB×9/BAA | AABIY₇AY₇//Y₇AY₇ /BAB×9/BAA | AAB/ZAZ//ZAZ/BA B×9/BAA | AAB/CY₅C//BAB×9 /BAA | AAB/CY₇C//BAB×9 /BAA |
| Layer P thickness in precursor | µm | 3.0 | 3.0 | 3.0 | 24 | 24 |
| Layer P depth r | µm | 227 | 227 | 227 | 203 | 203 |
| Multilayer sheet thickness R | mm | 2.3 | 2.3 | 2.3 | 2.2 | 2.2 |
| r/R | | 10% | 10% | 10% | 9.1% | 9.1% |
| Total Dh thickness/total Dl thickness | | 9.7 | 9.7 | 9.7 | 9.8 | 9.8 |
| Amount of component (A2) in layer P | wt% | 18 | 31 | 27 | 27 | 31 |
| Press setting temperature at lamination | °C | 163 | 163 | 163 | 163 | 163 |
| MFR of layer P | g/10 min | 2.0 | 12.7 | 6.0 | 11 | 13 |
| C2 amount in component (A1) in layer P | wt% | 3.2 | 2.1 | 2.2 | 3.2 | 2.1 |
| C4 amount in component (A2) in layer P | wt% | 23 | 21 | 22 | 20 | 21 |
| XSIV of layer P | wt% | 1.1 | 1.1 | 1.1 | 1.0 | 1.1 |
| Peel strength (initial load/integrated average load in 50 mm long peeling) | N/15 mm | 34.9/33.2 | 34.7/32.3 | 29.7/27.8 | 31.3/28.4 | 41.6/38.7 |
| Flexural modulus at 23°C | MPa | 2530 | 2580 | 2580 | 2540 | 2590 |
| Charpy impact strength at -30°C | kJ/m² | 43.3 | 41.9 | 43.2 | 44.1 | 42.8 |
| Density | g/mL | 0.91 | 0.91 | 0.91 | 0.91 | 0.91 |

**[Table 3-2]**

| Table 3 (continued) | | | | | | |
|---|---|---|---|---|---|---|
| | Unit | Examples | | | | |
| | | 2-6 | 2-7 | 2-8 | 2-9 | 2-10 |
| Peeling layer compositions X, Y, Z | | Z | Z | X₃ | Y₈ | Y₃ |
| Layer configuration | | AAB/CZC//BAB×9/ BAA | CAC×4/CZC//BAB ×9/BAA | AAB/X_{3U}//BAB×9/ BAA | AAB/Y_{8U}//BAB×9/ BAA | AAB/BAB/Y₃AY₃// Y₃AY₃/BAB×9/BA A |
| Layer P thickness in precursor | µm | 24 | 24 | 60 | 60 | 3.0 |
| Layer P depth r | µm | 203 | 123 | 200 | 200 | 427 |
| Multilayer sheet thickness R | mm | 2.2 | 2.2 | 2.3 | 2.3 | 2.5 |
| r/R | | 9.1% | 5.7% | 9% | 9% | 17% |
| Total Dh thickness/total Dl thickness | | 9.8 | 8.8 | 7.7 | 7.7 | 9.6 |
| Amount of component (A2) in layer P | wt% | 27 | 27 | 32 | 24 | 21 |
| Press setting temperature at lamination | °C | 163 | 163 | 163 | 163 | 163 |
| MFR of layer P | g/10 min | 6.0 | 6.0 | 30.0 | 2.4 | 5.0 |
| C2 amount in component (A1) in layer P | wt% | 2.2 | 2.2 | 3.2 | 1.7 | 3.2 |
| C4 amount in component (A2) in layer P | wt% | 22 | 22 | 19 | 24 | 22 |
| XSIV of layer P | wt% | 1.1 | 1.1 | 1.0 | 1.2 | 1.1 |
| Peel strength (initial load/integrated average load in 50 mm long peeling) | N/15 mm | 34.1/29.3 | 32.2/24.1 | 20.0/25.0 | 27.1/28.0 | 32.9/38.2 |
| Flexural modulus at 23°C | MPa | 2590 | 2580 | 2500 | 2540 | 2510 |
| Charpy impact strength at -30°C | kJ/m² | 43.6 | 41.1 | 42.2 | 39.8 | 40.5 |
| Density | g/mL | 0.91 | 0.91 | 0.91 | 0.91 | 0.91 |

**[Table 4]**

| Table 4 | | | | |
|---|---|---|---|---|
| | Unit | Examples | | |
| | | 1-1 | 1-2 | 1-3 |
| Peeling layer compositions X, Y, Z | | X₂ | X₂ | X₂ |
| Layer configuration | | AAB/CX₂C// BAB×9/BAA | AAB/CX₂C// BAB×2/BAA | AAB/CX₂Cᵤ-3//BAB×9/BAA |
| Layer P thickness in precursor | µm | 24 | 24 | 20 |
| Layer P depth r | µm | 203 | 203 | 220 |
| Multilayer sheet thickness R | mm | 2.2 | 0.8 | 2.3 |
| r/R | | 9.1% | 24% | 9.7% |
| Total Dh thickness/total Dl thickness | | 9.8 | 11.6 | - |
| Amount of component (A2) in layer P | wt% | 30 | 30 | 30 |
| Press setting temperature at lamination | °C | 163 | 163 | 163 |
| MFR of layer P | g/10 min | 3.0 | 3.0 | 3.0 |
| C2 amount in component (A1) in layer P | wt% | 0.0 | 0.0 | 0.0 |
| C4 amount in component (A2) in layer P | wt% | 25 | 25 | 25 |
| XSIV of layer P | wt% | 1.3 | 1.3 | 1.3 |
| Peel strength (initial load/integrated average load in 50 mm long peeling) | N/15 mm | 22.4/15.5 | 19.9/17.2 | 29.4/19.3 |
| Flexural modulus at 23°C | MPa | 2560 | - | 2510 |
| Charpy impact strength at -30°C | kJ/m² | 36.5 | - | 40.4 |
| Density | g/mL | 0.91 | 0.91 | 0.91 |

**[Table 5]**

| Table 5 | | | | | | | | |
|---|---|---|---|---|---|---|---|---|
| | Unit | Comparative Examples | | | | | | |
| | | 1 | 2 | 3 | 4 | 5 | 6 | 7 |
| Peeling layer compositions X, Y, Z | | X₂ | Y₃ | Y₆ | Y₇ | Z | X₂ | A |
| Layer configuration | | X₂AX₂//X₂AX₂/B AB×9/BAA | Y₃AY₃//Y₃AY₃/ BAB×9/BAA | Y₆AY₆//Y₆AY₆/ BAB×9/BAA | Y₇AY₇//Y₇AY₇/ BAB×9/BAA | ZAZ//ZAZ/B AB×9/BAA | CX₂C-2//BAB×9/B AA | AAB//BAB ×4/BAA |
| Layer P thickness in precursor | µm | 3.0 | 3.0 | 3.0 | 3.0 | 3.0 | 48 | - |
| Layer P depth r | µm | 27 | 27 | 27 | 27 | 27 | 6 | - |
| Multilayer sheet thickness R | mm | 2.3 | 2.1 | 2.1 | 2.1 | 2.1 | 2.1 | 1.2 |
| r/R | | 1.2% | 1.3% | 1.3% | 1.3% | 1.3% | 0.3% | - |
| Total Dh thickness/total DI thickness | | 9.7 | 9.2 | 9.2 | 9.2 | 9.2 | 9.2 | 11.0 |
| Amount of component (A2) in layer P | wt% | 30 | 21 | 28 | 31 | 27 | 30 | 30 |
| Press setting temperature at lamination | °C | 173 | 163 | 163 | 163 | 163 | 163 | 163 |
| MFR of layer P | g/10 min | 3.0 | 5.0 | 14 | 13 | 6.0 | 3.0 | - |
| C2 amount in component (A1) in layer P | wt% | 0.0 | 3.2 | 3.2 | 2.1 | 2.2 | 0.0 | - |
| C4 amount in component (A2) in layer P | wt% | 25 | 22 | 20 | 21 | 22 | 25 | - |
| XSIV of layer P | wt% | 1.3 | 1.1 | 1.0 | 1.1 | 1.1 | 1.3 | - |
| Peel strength (initial load/ integrated average load at 50 mm long peeling) | N/15 mm | 5.8/3.9 | 4.2/- | 5.0/- | 4.9/- | 8.0/1.8 | 56.7/- | 49.1/- |
| Flexural modulus at 23°C | MPa | 2550 | 2500 | 2510 | 2560 | 2550 | 2540 | 2600 |
| Charpy impact strength at -30°C | kJ/m² | 42.3 | 40.3 | 39.5 | 38.8 | 40.5 | 41.3 | - |
| Density | g/mL | 0.91 | 0.91 | 0.91 | 0.91 | 0.91 | 0.91 | 0.91 |

### [Evaluation method]

1) Total amount of ethylene of (component (A1) + component (A2)), and content of ethylene-derived unit of component (A1)
   Measurement was performed as described above.
2) Ethylene unit content in component (A2)
   Measurement was performed as described above. The C4 to C10 α-olefin unit content (wt%) of the component (A2) was calculated from 100 - ethylene unit content (wt%).
3) Weight ratio of component (A2)/[component (A1) + component (A2)]
   Measurement was performed as described above. When the component (A1) contained an ethylene unit, the weight ratio was estimated from the polymerization conditions.
4) MFR
   Regarding the MFR of the polypropylene-based resin, to 5 g of a sample, 0.05 g of H-BHT manufactured by Honshu Chemical Industry Co., Ltd. was added, and the mixture was homogenized by dry blending. Then, the mixture was measured under the conditions of a temperature of 230°C and a load of 2.16 kg according to JIS K7210-1 based on JIS K6921-2.
   The MFR of the polypropylene-based resin composition was measured under the conditions of a temperature of 230°C and a load of 2.16 kg according to JIS K7210-1 based on JIS K6921-2.
5) Peeling test
   A 180-degree peeling test was conducted using AUTO COM universal testing machine, manufactured by T.S.E. Co., Ltd..
   The sheet produced in each of the examples was cut into a strip having a width of 15 mm to prepare a test piece. The top layer and the lowermost layer of the test piece were respectively gripped with chucks. The distance between the chucks was set to 50 mm, and the chucks were moved at a speed of 300 mm/min to perform a tensile test. The test piece was pulled by 100 mm or more, and an average value of test forces in a stable section of 50 mm during material failure was used as a test value.
6) Flexural modulus
   Measurement was performed in accordance with JIS K7171.
   The multilayer sheet was cut into a width of 10 mm and a length of 80 mm to prepare a test piece. The flexural modulus was measured using a precision universal testing machine (autograph AG-X10kN) manufactured by Shimadzu Corporation under the conditions of a temperature of 23°C, a relative humidity of 50%, a span of 32 mm, and a test speed of 2 mm/min.
7) Charpy impact strength
   The Charpy impact strength was measured using a test piece obtained by cutting the multilayer sheet into a width of 10 mm and a length of 80 mm in the same operation as the test piece used in the flexural modulus measurement. That is, according to JIS K7111-1, the multilayer sheet was cut into a width of 10 mm and a length of 80 mm, and a 2-mm notch was made in the multilayer sheet in the width direction using a notching tool A-4 manufactured by Toyo Seiki Seisaku-sho, Ltd., thus preparing a measurement test piece having a shape A. The Charpy impact strength (edgewise impact, 1eA method) was measured for the measurement test piece under the condition of a temperature of -30°C using a fully automatic impact tester with a low-temperature chamber (No. 258-ZA) manufactured by Yasuda Seiki Seisakusho Co., Ltd.
8) Density
   Measurement was performed in accordance with JIS K7112.

### REFERENCE SIGNS LIST

- 1: Multilayer sheet
- 10: Layer P
- 10P': Layer P'
- 10P": Layer P"
- 12: Biaxially stretched polypropylene layer
- 12H: First biaxially stretched polypropylene layer
- 12L: Second biaxially stretched polypropylene layer
- 13: Polypropylene layer
- 14: Polypropylene layer
- 1': Precursor

## Claims

1. A polypropylene multilayer sheet having a thickness of 0.5 to 5 mm, wherein
the polypropylene multilayer sheet includes:
a plurality of biaxially stretched polypropylene layers; and
one or more layers P composed of a composition containing a polypropylene-based resin and an ethylene-C4 to C10 α-olefin copolymer, and
the polypropylene multilayer sheet has the following characteristics:
1) the layer P has a thickness of 0.5 to 500 µm,
2) at least one of the layers P is present at a position satisfying 2% ≤ r/R
where r is a distance from an origin to a position of an interface between the layer P and another layer on the origin side in the thickness direction, and
R is a total thickness of the multilayer sheet,
provided that the origin is a surface of the multilayer sheet, the surface being a surface where r is minimum, and
3) a content of the ethylene-C4 to C10 α-olefin copolymer in the composition constituting the layer P is 10 to 40 wt%.

2. The polypropylene multilayer sheet according to claim 1, wherein
the composition constituting the layer P has a melt flow rate (MFR) (230°C, load 2.16 kg) of 0.5 to 30 g/10 min, and
an intrinsic viscosity of a normal temperature xylene soluble component in the composition is 0.5 to 4 dL/g.

3. The polypropylene multilayer sheet according to claim 2, wherein
the composition constituting the layer P contains a polypropylene-based resin having a phase structure in which a component (A2) is dispersed in a component (A1),
the component (A1) is 60 to 90 wt% of a propylene (co)polymer containing 0 to 5 wt% of a comonomer-derived unit selected from C2 to C10 α-olefins (excluding C3 α-olefins), and
the component (A2) is 10 to 40 wt% of an ethylene-C4 to C10 α-olefin copolymer containing 10 to 35 wt% of a C4 to C10 α-olefin-derived unit.

4. The polypropylene multilayer sheet according to claim 1 or 2, wherein the layer P is a biaxially stretched layer.

5. The polypropylene multilayer sheet according to claim 1 or 2, wherein
the polypropylene multilayer sheet is formed by a method including fusing interlayers of a precursor in which a biaxially stretched polypropylene sheet-like part that forms the biaxially stretched polypropylene layer and a sheet-like part that forms the layer P are laminated,
the precursor includes a coextruded layer in which polypropylene layers are respectively laminated on both sides of the layer P,
the layer P is a layer P' containing a polypropylene-based resin having a phase structure in which a component (A2) is dispersed in a component (A1'),
the component (A1') is 60 to 90 wt% of a propylene polymer, and
the component (A2) is 10 to 40 wt% of an ethylene-C4 to C10 α-olefin copolymer containing 10 to 35 wt% of a C4 to C10 α-olefin-derived unit.

6. The polypropylene multilayer sheet according to claim 5, wherein the coextruded layer is a biaxially stretched layer.

7. The polypropylene multilayer sheet according to claim 1 or 2, wherein
the polypropylene multilayer sheet is formed by a method including fusing interlayers of a precursor in which a biaxially stretched polypropylene sheet-like part that forms the biaxially stretched polypropylene layer and a sheet-like part that forms the layer P are laminated,
the layer P is a layer P" containing a polypropylene-based resin having a phase structure in which a component (A2) is dispersed in a component (A1"),
the component (A1") is 60 to 90 wt% of a propylene copolymer containing more than 0 and up to 5 wt% of a comonomer-derived unit selected from C2 to C10 α-olefins (excluding C3 α-olefins), and
the component (A2) is 10 to 40 wt% of an ethylene-C4 to C10 α-olefin copolymer containing 10 to 35 wt% of a C4 to C10 α-olefin-derived unit.

8. The polypropylene multilayer sheet according to claim 7, wherein the precursor includes a coextruded layer in which the layers P" are respectively laminated on both sides of the biaxially stretched polypropylene layer.

9. The polypropylene multilayer sheet according to claim 1 or 2, wherein the layer P contains 10 wt% or less of an inorganic filler.

10. A formed article obtained by forming the polypropylene multilayer sheet according to claim 1.

11. The formed article according to claim 10, wherein the formed article is an automobile part.

12. A peeling method for peeling at least one layer from the polypropylene multilayer sheet according to claim 1 or 2 or the formed article according to claim 10, wherein the layer P is used as a peeling layer.
